# EUROPEAN PATENT SPECIFICATION

(11) **EP 1 808 626 B1**
(45) Date of publication and mention of the grant of the patent: **13.10.2010**
(21) Application number: 06100402.4
(22) Date of filing: 16.01.2006
(51) Int. Cl.: F16K 35/06

(54) **Valve with locking mechanism**
Ventil mit Verriegelungsmechanismus
Vanne avec mécanisme de verrouillage

(43) Date of publication of application: 18.07.2007
(73) Proprietor: Ferrero Rubinetterie s.r.l., 12060 Farigliano (CN) (IT)
(72) Inventor: Ferrero, Riccardo Ferrero Rubinetterie s.r.l., 12060 Farigliano (CN) (IT)
(74) Representative: Robba, Pierpaolo

(56) References cited:
- EP-A- 1 039 193
- DE-A1- 10 060 760
- DE-C1- 19 644 533
- US-A- 4 971 289
- US-A- 5 285 997
- US-A- 5 370 148

## Description

### Field of the invention

The present invention relates to a valve for supplying fluids provided with a safety device that prevents or limits unauthorised users from opening and closing said valve and to a method to manufacture said valve.

Such valve can be used as an example in distribution networks of drinking water or gas.

### Background art

In some applications such as supplying water, gas or other fluids, it is desired that some valves of the distribution network of these fluid can be blocked in a predetermined position in a simple way and unblocked in a simple way as well, in order for example to prevent defaulting or however unauthorised users from taking that fluids illicitly.

In the particular case of valves to be closed or opened acting on a rotary closing member - for example ball- or butterfly valves- several solutions have been developed in which the closing member can be blocked and unblocked with a lock system and a removable key. Examples of such systems are described in patent application EP 1 065 421 or in the patent IT 1 226 834.

US 5 285 997 discloses a rotary valve provided with a device for locking an operation lever through which the rotary valve -that is, the valve rotary closing member- can be pivoted. The operation lever can he reversibly blocked in a predetermined position through a latch arranged by side of the rotary valve. The latch is operated by depressing a button, and locks or unlocks the operation lever by sliding parallel to the rotation axis of the rotary valve.

EP 1 039 193 A2 discloses a valve for pipings. The operation shaft of the valve can be reversibly locked in a predetermined position through a latch pin engaging with a locking opening provided in the valve housing.

Moreover in other applications, such as supplying water in poor and very warm countries, or supplying gas, it is desirable preventing unauthorized takings of the supplied fluid without closing the valve, and as an example assuring however the supply of a minimal flow.

An object of the present invention is providing an improved valve, in comparison with the ones of the prior art previously described, as to robustness and tampering resistance, and which can be manufactured by modifying a relatively small number of components in comparison to a version of the valve lacking the blocking system.

### Summary of the invention

In a first aspect of the present invention this object is achieved with a valve having the features according to claim 1.

Particular embodiments of the invention are defined in the dependent claims. In particular, in a preferred embodiment, the valve according to the invention comprises a handle body suitable for being gripped so as to allow the rotary closing member to be operated manually.

According to a preferred embodiment, the handle body is provided with:
- a protection hole provided with a threaded portion;
- a dowel or a screw or an other threaded male member screwed in the threaded portion so as to close the protection hole, wherein the dowel or screw or other threaded male member comprises a tool interface with which a tool can engage for screwing or unscrewing the dowel or screw or other threaded male member, wherein the tool interface is fitted in the protection hole and the thread of the threaded portion arranged between the tool interface and the end opening of the protection hole, is deformed so as to prevent the dowel or screw or other thread male member from being unscrewed.

According to a preferred embodiment the tool interface is at a distance, from the end mouth of the protection hole, at least equal to or greater than the pitch of the thread of said threaded portion.

According to a preferred embodiment, the valve according to the invention comprises a closing member fastening screw that fixes the handle body to the rotary closing member, wherein at least the head of the closing member fastening screw is housed in the portion of the protection hole that is closed and protected by the dowel or screw or another threaded male member.

The present invention further relates to a method having the features according to claim 17.

The advantages achievable with the present invention will appear more clearly for a technical expert from the following detailed description of a particular preferred and nonlimiting embodiment, shown in the following schematic figures.

### List of Figures

Figures 1 and 2 show a perspective top view and a perspective bottom view, respectively, of a first preferred embodiment of a valve according to the present invention;
Figure 3 shows a side view of the valve of Figure 1, cross-sectioned according to the cross-section plane III-III;
Figure 4 shows a top view of the valve of Figure 1, cross-sectioned according to the cross-section plane IV-IV, which is perpendicular to the rotation axis of the rotary closing member;
Figure 5 shows a perspective bottom view of a second preferred embodiment of a valve according to the present invention;
Figure 6 shows a cross-sectioned top view of the valve of Figure 5, according to a cross-section plane perpendicular to the rotation axis of the rotary closing member;
Figures 7A, 7B show two steps of the assembling of a third preferred embodiment of a valve according to the present invention.

### Detailed description

The valve of the enclosed Figures comprises an outer body 1 inside which a duct C is provided for allowing the fluid to be supplied -such as water or gas- to flow.

Such duct C can be closed and opened acting on the rotary closing member 2, suitable for rotating around the axis AR. In the present preferred embodiment the rotary closing member 2 comprises a drive stem 20 drive and a ball 21, and can be operated by an operator or user through a handle 30; in other embodiments, not shown, the handle 30 can be replaced with a handwheel, a knob or another member to be gripped suitable for being operated manually.

The handle 30 is provided on a handle body 3.

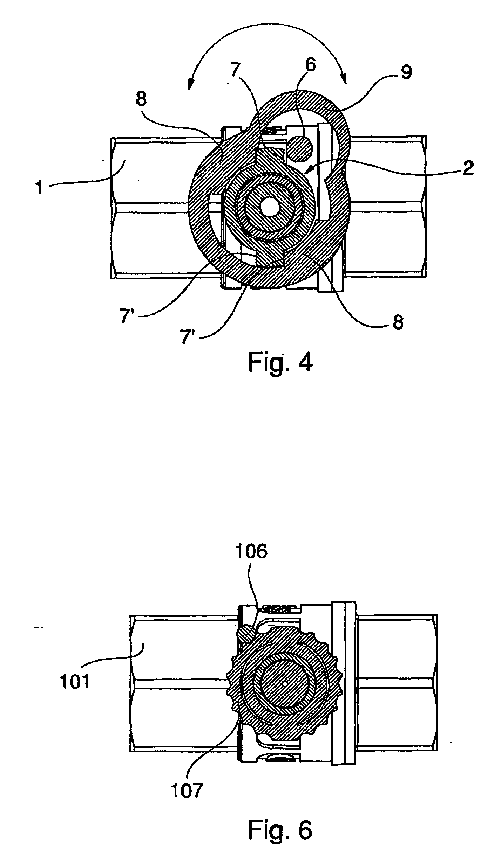

On the handle body 3, a cylinder of a lock (Figure 4) is mounted, fitted in a housing made in the handle body itself. The lock cylinder 4 can open or closed (that is, unblocked or blocked) with a removable key 5 - for example a five-notches key.

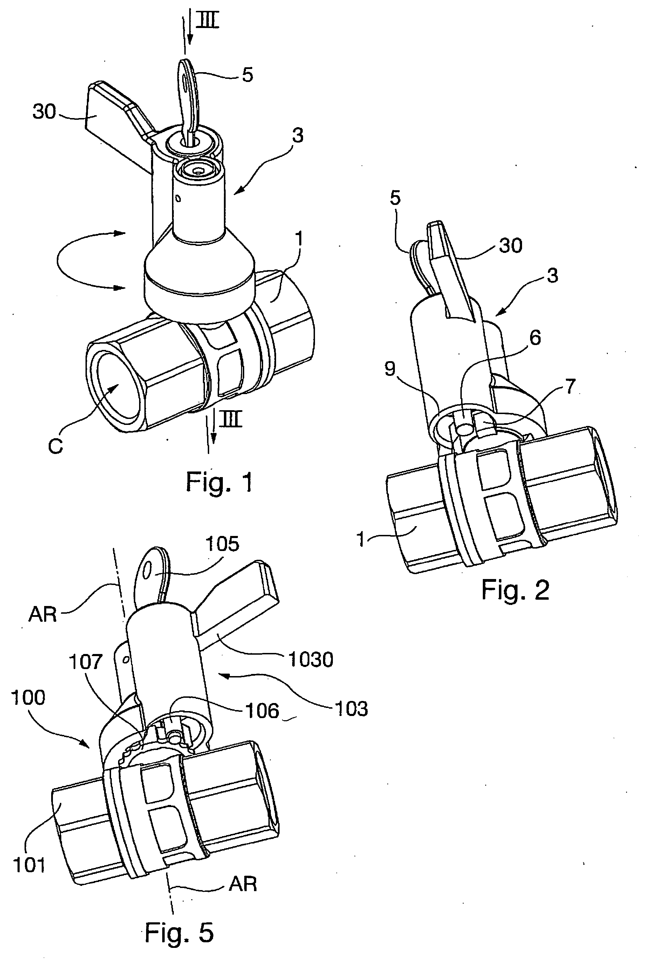

According to the present invention, the valve is provided with a locking pin 6 (Figure 2,3,4) - or with another blocking element that, driven by the lock cylinder 4, can slide parallel to the rotation axis AR or, more generally, move at least with a displacement component parallel to the rotation axis AR passing from a raised position (retracted) to a lowered position (extended). Moreover the locking pin 6 is arranged by side of the closing member 2.

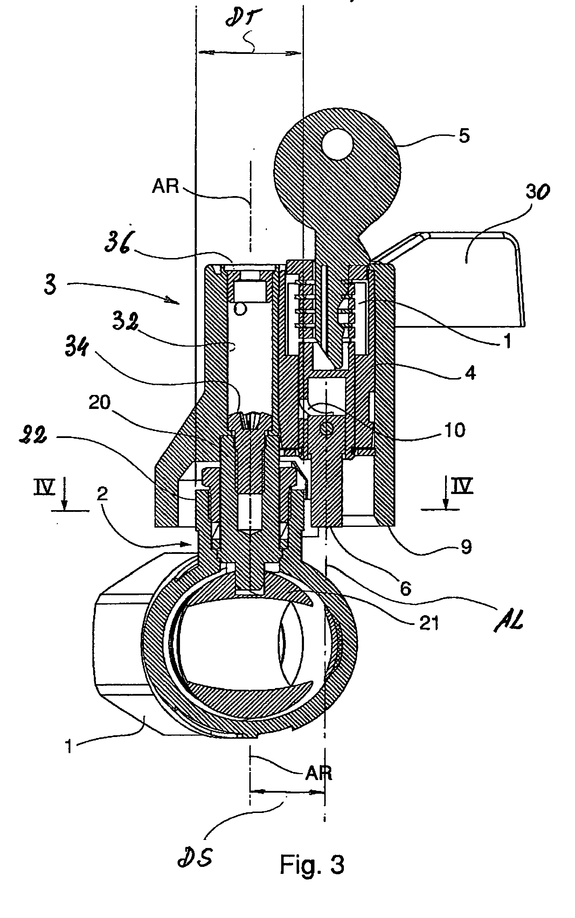

In the present preferred embodiment the pin 6 moves simply translating along a straight line parallel to the axis AR thanks to the cam system 10 (Figure 3) that transforms the rotary motion of the key 5 in a rectilinear motion and, when it is in a lowered position, leans, by turning more or less slightly the handle 30, against a fixed mechanical stop 7 (Figure 4) made on the outer body 1, so as to prevent a further rotation of the closing member.

In Figure 4, the references 8 indicate protrusions made on the handle body 3 - or on the closing member 2 - and suitable for leaning against the of mechanical stop surfaces 7, 7' provided on the outer body 1.

By suitably positioning the pin 6, the maximum opening angle of the valve, that is however allowed when the lock is closed and the key has been removed, can be limited as desired, as an example so as to set a minimum flow of fluid to be supplied also to defaulting or not authorised customers.

The arrangement of the locking pin 6 by side of and externally to the closing member allows robust hinges to be used of relatively big dimensions, since there are relatively little constraints of overall dimensions, and also allows a valve with blocking lock to be provided by reusing several components of valves without lock. Furthermore, unlike valves known in the art, seats for housing or engaging the blocking element 6 do not need to be provided in the closing member.

Several kinds of commercial lock cylinders -or of other closure systems- can be arranged in the handle body 3 with great design freedom.

In other embodiments, not shown, the pin 6 in extended position can be caused to engage in a hole, in a plurality of holes or in slots suitably arranged and made on the outer body 1, so as to completely block the rotation of the handle 3 and of the closing member 1 in predetermined positions or so as to limit of the rotation within predetermined angles and angular positions so as to prevent the complete opening or the complete closing of the valve when the lock is closed: that is, thanks to the present invention a great variety of valves with various ways and laws of blocking can be obtained, with reduced investments for forms and tooling and small design modifications.

Preferably but not necessarily a protecting edge 9 extends around the locking pin 6 (Figures 2,3) so as to protect the pin 6 as an example from attempts of breaking open with saws and grinding wheels.

Figures 5, 6 are relative to a second preferred embodiment of a valve with safety device according to the present invention. In such valve, referred to as with the overall reference 100, the rotation of handle 1030 can be blocked with a locking pin 106 that, sliding longitudinally to the rotation axis AR of the handle 1030 and of a rotary closing member - the latter is not shown-, in a lowered position engages one of the notches made in a metal ring 107 integral with the outer body 101 of the valve 100. The lowering or the raising of the pin 106 is driven by a lock cylinder housed in the handle body 103. Such cylinder can be blocked and unblocked with a removable key 105.

In the present preferred embodiment a series of notches is made on the metal ring 107, arranged as a crown, so as to allow the handle 1030 and the rotary closing member of the valve 100 to be blocked in a plurality of predetermined positions, each of which corresponding to a predetermined opening degree.

Referring again to the preferred embodiment of the Figures 1-4, the outer body 1 of the valve defines, like in several valves *per se* known in the art, a substantially cylindrical head 22, that in the present description will be referred to as "operation head 22" and in the Italian technical jargon is also called" testa del premistoppa ". The driving stem 20 can rotate in the operation head 22, so as to drive the mobile closing member. The operation head extends transversely to the fluid flow duct C, within which the fluid flows the flow of which must be controlled by the valve. In the present preferred embodiment, the handle body 3 is mounted on the operation head 22.

Preferably the displaceable blocking pin 6 is positioned at a suitably small distance from the operation head 22, as an example arranging the rotation axis AR of the rotary closing member 2 and the longitudinal axis AL of the locking pin 6 at a distance DS one from the other substantially equal to or smaller than the diameter DT (Figure 3 - eventually than the average diameter) of the operation head 22. More preferably distance DS is equal to or smaller than three quarters (3/4) of the diameter DT of the head 22. In even other embodiments the distance DS is equal to or smaller than the half of the diameter DT of the head 22. This way valves according to the present invention can be made using outer bodies 1 of pre-existing valves which, according to the prior art, up to now were sold without the blocking lock 4. In particular, this way when lock 4 is closed the blocking pin 6 can lean as an example against radial protrusions 7 provided on the operation head 22 itself (Figure 2) and that protrude radially relative to the diameter DT of said head. This allows quite a diversified range of valves to be manufactured with and without lock with reduced tooling costs, and largely taking advantage of forms and production equipments already existing for manufacturing valves of known type.

The solution described just above can be applied also to the case in which the axes AR and

AL are not parallel but oblique each to the other, considering the minimum distance between two points of the two oblique AR and AL as the distance DS. The locking pin 6 can be replaced by various shaped bodies, as an example a tooth or another elongated element.

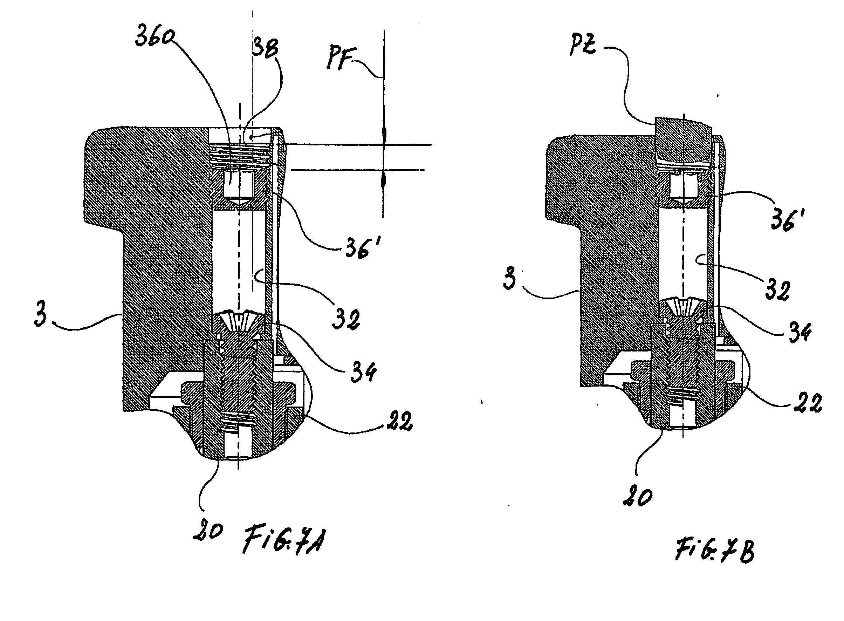

The Figures 7A, 7B relate to a version of the embodiment of Figure 3. According to such version, a protection hole 32 is made in the handle body 3 so as to extend by side of and longitudinally to the lock cylinder 4.

A screw 34 -also referred to as "closing member fastening screw" 34, in the present description- is deeply enclosed in the hole 32 and arranged near to the bottom thereof, and fastens the handle body 3 to the drive stem 20, allowing the rotary closing member 2 to be operated. In order to prevent tampering of the valve, the upper opening of the protection hole 32 can be closed, as an example with a plug or a threaded dowel 36 (Figure 3).

In the version of the Figures 7A, 7B the upper opening of the protection hole 32 is closed with a threaded dowel 36' that is completely and deeply inserted in the hole 32, at an insertion depth PF (Figure 7A), relative to the opening of the hole 32 itself, equal to N times the pitch of the thread of the hole 32, wherein N is preferably but not necessarily equal to or greater than 1. The reference 38 indicates the female thread of the hole 32, in which the dowel 36 ' is screwed. The reference 360 indicates, in the shown embodiment, the hexagonal socket allowing the dowel 36' to be screwed and unscrewed, as an example by means of an Allen wrench.

Subsequently (Figure 7B) the threads of the thread portion 38 between the hexagon socket 360 - and/or the top of the dowel 36 ' - and the upper opening of the hole 32 are permanently deformed, as an example with a punch PZ, so as to prevent the dowel 36 ' itself from being unscrewed. This way the tampering of the operating valve is further hindered, as an example in comparison to the embodiment of Figure 3.

The preferred embodiments previously described are susceptible of various modifications and variations without departing from the scope of the present invention as defined by the claims: as an example the locking pin 6 can slide so as to blocking, unblocking or limiting the rotation of the rotary closing member 2, longitudinally to itself even in a direction not parallel to the rotation axis AR of the same closing member; the locking pin 6 or another blocking element 6 and/or the lock cylinder 4 can be housed in a seat provided in the outer body 1 instead of in the handle body 3; the pin 6 can be replaced by other mobile blocking element such as teeth or movable protrusions that move roto-translating instead of simply translating like in the example of Figures 1-4. The dowels 36, 36 ' can be replaced with screws or other threaded male elements. The hexagonal socket 360 can more generally be replaced with a tool interface that a tool can engage in order to unscrew and to screw the dowel 36 or 36 '. The lock cylinder 4 can be replaced by other mechanisms or blocking devices, electromechanical or mechanical, that can be switched between a closing condition and an opening condition by mechanical keys.

## Claims

1. Valve for supplying fluids, comprising:
- an outer body (1);
- a fluid flow duct (c) made in the outer body (1) and suitable for allowing a fluid to be supplied to flow through the valve;
- a rotary closing member (2) suitable for closing or opening at least a section of the fluid flow duct (c), by rotating the rotary closing member (2) around a predetermined rotation axis (AR);
- a movable blocking member (6);
- a safety device (4) suitable for driving the movable blocking member (6);
wherein the movable blocking member (6) is arranged substantially by side of the rotary closing member (2) and is suitable for moving relative to the rest of the valve, so as to block and to unblock or to limit the rotation of the rotary closing member (2), at least with a displacement component parallel to the predetermined rotation axis (AR), wherein the safety device (4) can be operated with a key (5) or another removable operation element; **characterised in that** the movable blocking member (6) moves translating along a straight line thanks to a cam system (10) that transforms a rotary motion of the key (5) or other removable operation element in a rectilinear motion.

2. Valve according to claim 1, **characterised in that** said straight line is parallel to said predetermined rotation axis (AR).

3. Valve according to claim 1 or 2, **characterised by** further comprising a handle body (3) comprising for example a handle (3a), a handwheel, a knob or another member to be gripped and suitable for being gripped so as to allow the rotary closing member (2) to be manually operated.

4. Valve according to one or more preceding claims, **characterised in that**:
a) on the handle body (3) and/or the rotary closing member (2); and
b) on the outer body (1)
mechanical stops (7 ', 8) are provided suitable for leaning one against the other so as to limit the rotation of the rotary closing member (2), and the movable blocking member (6) is suitable for interposing between at least one mechanical stop (8) provided on the handle body (3) and one mechanical stop fixed relative to the outer body (1) so as to further limit the rotation of the closing member (2).

5. Valve according to one or more preceding claims, **characterised in that** the movable blocking member comprises a pin or tooth (6).

6. Valve according to claim 3, **characterised in that** the movable blocking member (6) is mounted on the handle body (3).

7. Valve according to claim 6, **characterised in that** the movable blocking member (6) is suitable for leaning against a mechanical stop of or for engaging with at least a portion (7) of the outer body (1), for limiting the movements of the closing member (2).

8. Valve according to one or more preceding claims, **characterised in that** the safety device (4) is arranged by side of the rotary closing member.

9. Valve according to any of claim 3, 6 **characterised in that** the safety device (4) is mounted on the handle body (3).

10. Valve according to one or more preceding claims, **characterised by** comprising at least a protecting edge (9) arranged around the movable blocking member (6) at least when the latter is in a blocking position, so as to protect it at least from breakings open.

11. Valve according to one or more claims 6 to 10, **characterised in that** the movable blocking member (6) is suitable for engaging with one or more of the following elements, provided on or fixed to the outer body (1): a hole, a groove, a notch.

12. Valve according to one or more claims 3 to 11, **characterised in that** the handle body (3) is provided with:
- a protection hole (32) provided with a threaded portion (38);
- a dowel or a screw or another threaded male member (36 ') screwed in the threaded portion (38) so as to close the protection hole (32), wherein the dowel or screw or other threaded male member (36 ') comprises an tool interface (360), with which a tool can engage for screwing or unscrewing the dowel or screw or other thread male member (36 '), wherein the tool interface (360) is fitted in the protection hole, and the thread of threaded portion (38), arranged between the tool interface (360) and the end opening of the protection hole (32), is deformed so as to prevent the dowel or screw or other thread male member (36 ') from being unscrewed.

13. Valve according to one or more of the preceding claims, **characterised in that** the outer body (1) provides:
a) a substantially cylindrical operation head (22) extending transversely to the fluid flow duct (C); and
b) radial protrusions (7) provided on the operation head (22) and protruding radially therefrom;
and the movable blocking member (6) being a pin which is arranged for leaning against the radial protrusions (7).

14. Valve according to claim 13, **characterised in that** the outer body (1) provides two radial protrusions arranged on two opposite sides of the operation head (22).

15. Valve according to one or more claims 3 to 12, **characterised in that** the outer body (1) provides a substantially cylindrical operation head (22) extending transversely to the fluid flow duct (C), the handle body (3) is mounted on the operation head (22) and the movable blocking member (6) comprises a pin and/or an elongated element defining a longitudinal axis (AL), wherein the distance between such longitudinal axis (AL ) and the predetermined rotation axis (AR) are substantially equal to or smaller than the diameter of the operation head (22).

16. Valve according to claim 15, **characterised in that** the longitudinal axis (AL ) and the predetermined rotation axis (AR) are substantially parallel relative to each other.

17. Method for manufacturing a valve according to at least claim 12, comprising the following operations:
- fixing the handle body (3) to the rotary closing member (2) and/or to the outer body (1);
- closing the protection hole (32) by screwing a dowel or screw or other threaded male member (36 ') in the threaded portion (38), allowing a not null portion of the threaded portion (38) to extend between the tool interface (360) and the end mouth of the protection hole (32);
- permanently deforming the not null portion of the threaded portion (38) which extends between the tool interface (360) and the end mouth of the protection hole (32), so as to prevent the dowel or screw or other thread male member (36 ') to be unscrewed from the protection hole (32).

## Patentansprüche

1. Ventil zur Zuführung von Fluiden, mit:
- einem Außenkörper (1);
- einem Durchflusskanal (C), der im Außenkörper (1) vorgesehen ist und der den Durchfluss eines zu fördernden Fluids durch das Ventil erlaubt;
- einem drehbaren Schließelement (2), mit dem mindestens ein Abschnitt des Fluiddurchflusskanals (C) durch Drehen des drehbaren Schließelements (2) um eine festgelegte Drehachse (AR) geschlossen oder geöffnet werden kann;
- einem beweglichen Sperrelement (6);
- einer Sicherheitseinrichtung (4) für den Antrieb des beweglichen Sperrelements (6);
wobei das bewegliche Sperrelement (6) im Wesentlichen seitlich zum drehbaren Schließelement (2) angeordnet und relativ zum übrigen Teil des Ventils bewegbar ist, um das drehbare Schließelement (2) zu arretieren und freizugeben oder seine Drehung zu begrenzen mit mindestens einer parallel zur festgelegten Drehachse (AR) vorgesehenen Verschiebekomponente, wobei die Sicherheitseinrichtung (4) mit einem Schlüssel (5) oder einem anderen abnehmbaren Betätigungselement betätigt werden kann;
**dadurch gekennzeichnet, dass** sich das bewegliche Sperrelement (6) translatorisch längs einer geraden Linie bewegt aufgrund eines Nockensystems (10), das eine Drehbewegung des Schlüssels (5) oder eines anderen abnehmbaren Betätigungselements in eine geradlinige Bewegung umsetzt.

2. Ventil nach Anspruch 1,
**dadurch gekennzeichnet, dass** die gerade Linie parallel zur festgelegten Drehachse (AR) liegt.

3. Ventil nach Anspruch 1 oder 2,
**dadurch gekennzeichnet, dass** es außerdem einen Betätigungskörper (3) aufweist, der zum Beispiel einen Griff (3a), ein Handrad, einen Knopf oder ein anderes Teil zum Anfassen aufweist, und der zum manuellen Betätigen des drehbaren Schließelementes (2) gefasst werden kann.

4. Ventil nach einem oder mehreren der vorhergehenden Ansprüche,
**dadurch gekennzeichnet, dass**
a) auf dem Betätigungskörper (3) und/oder dem drehbaren Schließelement (2); und
b) auf dem Außenkörper (1)
mechanische Anschläge (7', 8) zur gegenseitigen Anlage vorgesehen sind, um die Drehung des drehbaren Schließelements (2) zu begrenzen, wobei das bewegliche Sperrelement (6) zwischen mindestens einem, an dem Betätigungskörper (3) vorgesehenen mechanischen Anschlag (8) und einem relativ zum Außenkörper (1) festen mechanischen Anschlag positionierbar ist, um die weitere Drehung des Schließelements (2) zu begrenzen.

5. Ventil nach einem oder mehreren der vorhergehenden Ansprüche,
**dadurch gekennzeichnet, dass** das bewegliche Sperrelement einen Stift oder Zahn (6) aufweist.

6. Ventil nach Anspruch 3,
**dadurch gekennzeichnet, dass** das bewegliche Sperrelement (6) auf dem Betätigungskörper (3) befestigt ist.

7. Ventil nach Anspruch 6,
**dadurch gekennzeichnet, dass** das bewegliche Sperrelement (6) zur Begrenzung der Bewegungen des Schließelements (2) an einen mechanischen Anschlag anlegbar ist oder mit mindestens einem Teil (7) des Außenkörpers (1) zusammenwirkt.

8. Ventil nach einem oder mehreren der vorhergehenden Ansprüche,
**dadurch gekennzeichnet, dass** die Sicherheitseinrichtung (4) seitlich zum drehbaren Schließelement angeordnet ist.

9. Ventil nach einem der Ansprüche 3, 6,
**dadurch gekennzeichnet, dass** die Sicherheitseinrichtung (4) auf dem Betätigungskörper (3) befestigt ist.

10. Ventil nach einem oder mehreren der vorhergehenden Ansprüche,
**dadurch gekennzeichnet, dass** es mindestens eine Schutzkante (9) aufweist, die das bewegliche Sperrelement (6) umgibt, zumindest wenn sich letzteres in einer Sperrposition befindet, um es so zumindest vor Aufbrüchen zu schützen.

11. Ventil nach einem oder mehreren der Ansprüche 6 bis 10,
**dadurch gekennzeichnet, dass** das bewegliche Sperrelement (6) zum Zusammenwirken mit einem oder mehreren der folgenden Elemente vorgesehen ist, die auf dem Außenkörper (1) vorgesehen oder an ihm befestigt sind:
ein Loch, eine Vertiefung, eine Aussparung.

12. Ventil nach einem oder mehreren der Ansprüche 3 bis 11,
**dadurch gekennzeichnet, dass** der Betätigungskörper (3) Folgendes aufweist:
- eine mit einem Gewindeabschnitt (38) versehene Schutzbohrung (32);
- einen Stopfen oder eine Schraube oder einen anderen, mit Gewinde versehenen Einsteckteil (36'), der in den Gewindeabschnitt (38) eingeschraubt ist, um die Schutzbohrung (32) zu verschließen, wobei der Stopfen oder die Schraube oder der andere mit Gewinde versehene Einsteckteil (36') eine Werkzeugschnittstelle (360) aufweist, mit der ein Werkzeug zum Ein- oder Ausschrauben des Stopfens oder der Schraube oder des anderen mit Gewinde versehenen Einsteckteils (36') in Eingriff bringbar ist, wobei die Werkzeugschnittstelle (360) in die Schutzbohrung eingepasst ist und wobei das Gewinde des Gewindeabschnitts (38), der zwischen der Werkzeugschnittstelle (360) und dem Austrittsende der Schutzbohrung (32) angeordnet ist, verformt ist, um zu vermeiden, dass der Stopfen oder die Schraube oder das andere mit Gewinde versehene Einsteckteil (36') ausgeschraubt wird.

13. Ventil nach einem oder mehreren der vorangehenden Ansprüche, **dadurch gekennzeichnet, dass** der Außenkörper (1) Folgendes aufweist:
a) einen im Wesentlichen zylindrischen Betätigungskopf (22), der sich quer zum Fluiddurchflusskanal (C) erstreckt; sowie
b) radiale, auf dem Betätigungskopf (22) vorgesehene Auskragungen (7), die radial von ihm absteht;
sowie das bewegliche Sperrelement (6), das als Stift ausgebildet und zur Anlage gegen die radialen Auskragungen (7) vorgesehen ist.

14. Ventil nach Anspruch 13,
**dadurch gekennzeichnet, dass** der Außenkörper (1) zwei radiale Auskragungen aufweist, die an zwei einander gegenüberliegenden Seiten des Betätigungskopfes (22) angeordnet sind.

15. Ventil nach einem oder mehreren der Ansprüche 3 bis 12,
**dadurch gekennzeichnet, dass** der Außenkörper (1) mit einem im Wesentlichen zylindrischen Betätigungskopf (22) versehen ist, der sich quer zum Fluiddurchflusskanal (C) erstreckt, dass der Betätigungskörper (3) auf dem Betätigungskopf (22) befestigt ist und dass das bewegliche Sperrelement (6) einen Stift und/oder ein eine Längsachse (AL) definierendes Längselement aufweist, wobei der Abstand zwischen dieser Längsachse (AL) und der festgelegten Drehachse (AR) im Wesentlichen gleich oder kleiner ist als der Durchmesser des Betätigungskopfes (22).

16. Ventil nach Anspruch 15,
**dadurch gekennzeichnet, dass** die Längsachse (AL) und die festgelegte Drehachse (AR) im Wesentlichen parallel zueinander verlaufen.

17. Verfahren zur Herstellung eines Ventils gemäß mindestens Anspruch 12, das folgende Schritte umfasst:
- Befestigung des Betätigungskörper (3) am drehbaren Schließelement (2) und/oder am Außenkörper (1);
- Verschließen der Schutzbohrung (32) durch Einschrauben eines Stopfens oder einer Schraube oder eines anderen mit Gewinde versehenen Einsteckteils (36') in den Gewindeabschnitt (38), der einen nicht auf Null gehenden Abschnitt des Gewindeabschnitts (38) erlaubt, sich zwischen der Werkzeugschnittstelle (360) und dem Austrittsende der Schutzbohrung (32) zu erstrecken;
- dauerhafte Verformung des nicht zu Null werdenden Gewindeabschnitts (38), der sich zwischen der Werkzeugschnittstelle (360) und dem Austrittsende der Schutzbohrung (32) erstreckt, um das Ausschrauben des Stopfens oder der Schraube oder des anderen mit Gewinde versehenen Einsteckteils (36') aus der Schutzbohrung (32) zu verhindern.

## Revendications

1. Vanne pour fournir des fluides, comprenant :
- un corps extérieur (1) ;
- un conduit d'écoulement de fluide (c)formé dans le corps extérieur (1) et approprié pour permettre à un fluide d'être fourni afin qu'il s'écoule à travers la vanne ;
- un élément de fermeture rotatif (2) approprié pour fermer ou ouvrir au moins une section du conduit d'écoulement de fluide (c) en faisant tourner l'élément de fermeture rotatif (2) autour d'un axe de rotation prédéterminé (AR) ;
- un élément mobile de verrouillage (6) ;
- un dispositif de sécurité (4) approprié pour commander l'élément mobile de verrouillage (6) ;
dans laquelle l'élément mobile de verrouillage (6) est agencé essentiellement à côté de l'élément de fermeture rotatif (2) et est approprié pour se déplacer par rapport à la partie restante de la vanne de façon à verrouiller et à déverrouiller ou à limiter la rotation de l'élément de fermeture rotatif (2), avec au moins une composante de déplacement parallèle à l'axe de rotation prédéterminé (AR), dans laquelle le dispositif de sécurité (4) peut être actionné avec une clé (5) ou un autre élément de fonctionnement amovible ;
**caractérisée en ce que** l'élément mobile de verrouillage (6) se déplace en translation le long d'une ligne droite grâce à un système de came (10) qui transforme un mouvement de rotation de la clé (5) ou d'un autre élément de fonctionnement amovible en un mouvement rectiligne.

2. Vanne selon la revendication 1, **caractérisée en ce que** ladite ligne droite est parallèle au dit axe de rotation prédéterminé (AR).

3. Vanne selon la revendication 1 ou 2, **caractérisée en ce qu'**elle comporte, de plus, un corps de poignée (3) comprenant, par exemple, une poignée (3a), un volant de manoeuvre, un bouton ou un autre élément à saisir et approprié pour être saisi de façon à permettre à l'élément de fermeture rotatif (2) d'être actionné manuellement.

4. Vanne selon l'une ou plusieurs des revendications précédentes, **caractérisée en ce que** :
a) sur le corps de poignée (3) et/ou l'élément de fermeture rotatif (2) ; et
b) sur le corps extérieur (1),
des butées mécaniques (7', 8) sont prévues, appropriées pour s'appuyer l'une contre l'autre de façon à limiter la rotation de l'élément de fermeture rotatif (2) et l'élément mobile de verrouillage (6) est approprié pour s'interposer entre au moins une butée mécanique (8) prévue sur le corps de poignée (3) et une butée mécanique fixe par rapport au corps extérieur (1) de façon à limiter encore la rotation de l'élément de fermeture (2).

5. Vanne selon l'une ou plusieurs des revendications précédentes, **caractérisée en ce que** l'élément mobile de verrouillage comporte une broche ou une dent (6).

6. Vanne selon la revendication 3, **caractérisée en ce que** l'élément mobile de verrouillage (6) est monté sur le corps de poignée (3).

7. Vanne selon la revendication 6, **caractérisée en ce que** l'élément mobile de verrouillage (6) est approprié pour s'appuyer contre une butée mécanique, ou pour s'engager avec au moins une partie (7), du corps extérieur (1), afin de limiter les déplacements de l'élément de fermeture (2).

8. Vanne selon l'une ou plusieurs des revendications précédentes, **caractérisée en ce que** le dispositif de sécurité (4) est disposé au côté de l'élément de fermeture rotatif.

9. Vanne selon l'une quelconque des revendications 3, 6, **caractérisée en ce que** le dispositif de sécurité (4) est monté sur le corps de poignée (3).

10. Vanne selon l'une ou plusieurs des revendications précédentes, **caractérisée par** le fait de comporter au moins un bord de protection (9) disposé autour de l'élément mobile de verrouillage (6) au moins lorsque ce dernier se trouve dans une position de verrouillage de façon à le protéger au moins d'une ouverture à force.

11. Vanne selon l'une ou plusieurs des revendications 6 à 10, **caractérisée en ce que** l'élément mobile de verrouillage (6) est approprié pour s'engager avec l'un ou plusieurs des éléments suivants, prévus sur le, ou fixés au, corps extérieur (1) : un trou, une gorge, une encoche.

12. Vanne selon l'une ou plusieurs des revendications 3 à 11, **caractérisée en ce que** le corps de poignée (3) est prévu avec :
- un trou de protection (32) doté d'une partie taraudée (38) ;
- d'un goujon ou d'une vis ou d'un autre élément mâle fileté (36') visse dans la partie taraudée (38) de façon à fermer le trou de protection (32), dans lequel le goujon ou la vis ou un autre élément mâle fileté (36') comporte une interface pour outil (360), avec laquelle un outil peut s'engager en vue de visser ou de dévisser le goujon ou la vis ou un autre élément mâle fileté (36'), dans laquelle l'interface pour outil (360) est ajustée dans le trou de protection , et le filetage de la partie taraudée(38), disposée entre l'interface pour outil (360) et l'ouverture d'extrémité du trou de protection (32), est déformée de façon à empêcher le goujon ou la vis ou un autre élément mâle fileté (36') de se dévisser.

13. Vanne selon l'une ou plusieurs des revendications précédentes, **caractérisée en ce que** le corps extérieur (1) fournit :
a) une tête de fonctionnement essentiellement cylindrique (22) s'étendant de façon transverse au conduit d'écoulement de fluide (C) ; et
b) des parties radiales en saillie (7) prévues sur la tête de fonctionnement (22) et s'avançant radialement à partir d'elle ;
et l'élément mobile de verrouillage (6) est une broche qui est disposée pour s'appuyer contre les parties radiales en saillie (7).

14. Vanne selon la revendication 13, **caractérisée en ce que** le corps extérieur (1) fournit deux parties radiales en saillie disposées sur les deux côtés opposés de la tête de fonctionnement (22).

15. Vanne selon l'une ou plusieurs des revendications 3 à 12, **caractérisée en ce que** le corps extérieur (1) fournit une tête de fonctionnement essentiellement cylindrique (22) s'étendant de façon transverse au conduit d'écoulement de fluide (C), le corps de poignée (3) est monté sur la tête de fonctionnement (22) et **en ce que** l'élément mobile de verrouillage (6) comporte une broche et/ou un élément de forme allongée définissant un axe longitudinal (AL), dans laquelle la distance entre cet axe longitudinal (AL) et l'axe de rotation prédéterminé (AR) est essentiellement égale, ou inférieure, au diamètre de la tête de fonctionnement (22).

16. Vanne selon la revendication 15, **caractérisée en ce que** l'axe longitudinal (AL) et l'axe de rotation prédéterminé (AR) sont essentiellement parallèles l'un par rapport à l'autre.

17. Procédé de fabrication d'une vanne selon au moins la revendication 12, comprenant les opérations suivantes :
- fixer le corps de poignée (3) sur l'élément de fermeture rotatif (2) et/ou le corps extérieur (1) ;
- fermer le trou de protection (32) en vissant un goujon ou une vis ou un autre élément mâle fileté (36') dans la partie taraudée (38), permettant à une partie non nulle de la portion taraudée (38) de s'étendre entre l'interface pour outil (360) et l'ouverture d'extrémité du trou de protection (32) ;
- déformer de façon permanente la partie non nulle de la portion taraudée (38) qui s'étend entre l'interface pour outil (360) et l'ouverture d'extrémité du trou de protection (32) de façon à empêcher le goujon ou la vis ou un autre élément mâle fileté (36') de se dévisser à partir du trou de protection (32).
